# EUROPEAN PATENT APPLICATION

(11) **EP 3 291 030 A1**
(43) Date of publication of application: **07.03.2018**
(21) Application number: 16186776.7
(22) Date of filing: 01.09.2016
(51) Int. Cl.: G05B 13/04

(54) **OPTIMIZING OPERATION OF HOT WATER SYSTEMS**

(71) Applicant: Enervalis N.V., 3530 Houthalen-Helchteren (BE)
(72) Inventor: Kazmi, Hussain, 3500 Hasselt (BE); Lodeweyckx, Stefan, 2990 Wuustwezel-Gooreind (BE)
(74) Representative: Philippaerts, Yannick

(57) **Abstract**

Method for optimizing operation of at least one of multiple hot water systems (2) in multiple buildings (1), the method comprising:
- collecting sensor data (12a,12b,12c) from said multiple hot water systems (2) in said multiple buildings (1) via a communication network, wherein the collected sensor data (12a,12b,12c) comprises multiple sets of at least a hot water system data record and a corresponding hot water system type;
- estimating a behavior for each of the hot water system types of the multiple hot water systems based on the collected sensor data (12a,12b,12c);
- optimizing operation of at least one of the hot water systems (2) based on the estimated behavior of the corresponding type of hot water system.

## Description

The present invention relates to a method for optimizing operation of hot water systems and/or their interaction with the energy grid.

Anthropogenic climate change is one of the biggest challenges facing humanity. Roughly 40% of global energy consumption and consequent greenhouse gases (GHGs) originate from the built environment, either residential or commercial. In many cases, heating, ventilation and air conditioning (HVAC) and hot water (HW) provision are the two most substantial draws. Two approaches have been pursued vigorously in recent years to mitigate this situation: improving energy efficiency and promoting renewable energy sources (such as solar, wind etc.).

These improvements have paved the way for net-zero energy buildings (NZEBs), which produce as much energy (e.g. using solar PV etc.) as they consume on average over time. However, renewable energy sources are, by nature, intermittent and stochastic. In the absence of large scale storage, they are also only available when the resource (wind or solar etc.) is naturally available.

Furthermore, while energy efficiency standards dramatically reduce energy consumption for HVAC in new buildings, they don't substantially reduce the energy required for HW provision because it is highly occupant-dependent and independent of façade improvements etc. to the building. These innovations also fail to address the vast majority of global building stock which is over 20 years old and highly inefficient.

US 2016/0010878 describes a machine learning-based smart water heater controller using wireless sensor networks. This document describes to use multiple sensors, at multiple locations in the building, to create a statistic model of probability of a water draw versus time. Furthermore, building characteristics are determined, including heat loss characteristics and heating behaviors. A drawback of this system is that many sensors are required in the building to provide enough data to determine the usage and building characteristics. These sensors have to be implemented in each building independently. Implementing these sensors can be cumbersome, labor-intensive and costly. Further, these sensors are devised to learn occupant behavior, which means that, unless determined otherwise, the operation of the HW system remains unknown.

A standard approach to tackle this latter problem of modeling operation of the HW system is to build a detailed thermodynamic model of the storage vessel using tests conducted in a testing laboratory in controlled, offline settings. This model building step is however impractical in the sense that it needs to be repeated for each hot water system to calibrate relevant parameters.

It is an object of the present invention to provide a method for automatically optimizing operation of a hot water system that is cheaper, more efficient, and less cumbersome to install.

To this end, the invention provides a method for optimizing operation of at least one of multiple hot water systems in multiple buildings, the method comprising:
- collecting sensor data from the multiple hot water systems in the multiple buildings via a communication network, wherein the collected sensor data comprises multiple sets of at least a hot water system data record and a corresponding hot water system type;
- estimating a behavior for each of the hot water system types of the multiple hot water systems based on the collected sensor data;
- optimizing operation of at least one of the hot water systems based on the estimated behavior of the corresponding type of hot water system.

The invention is based on the insight that hot water systems of the same type show a highly similar behavior, also when they are placed in different environments and when they are used differently. In fact, observing the same system in different environments with different perturbations enables learning of a more general model, i.e. one that is able to accurately represent the HW system under a wide variety of conditions. Therefore, data coming from multiple buildings, hence being collected from multiple distinct hot water systems, can be combined and used together particularly when they relate to hot water systems of the same type, to estimate the behavior of this system. The practical consequence is that the minimal sensor requirements for a satisfactory optimization operation significantly decreases. Another consequence is accelerated learning by making diverse aspects of the HW system operation visible, i.e. a substantial reduction in time required for learning the model to estimate the behavior of this system. Therefore less sensors are required and additional or extra or specific sensors can be added to each building based on opportunity.

Opportunity-based usage and/or placement of sensors is significantly less cumbersome and costly. Opportunity-based usage and/or placement of sensors allows to first make a cost-benefit analysis before providing the sensor. As such, sensors can be provided in locations which are easy accessible, and/or in locations where communication lines are already provided, and/or in situations where a particular additional sensor is believed to provide relevant extra information. Furthermore, many buildings already comprise sensors such as temperature sensors, energy flow sensors including gas flow and/or electricity flow meters. These sensors can be used in the method of the invention, and are considered opportunity-based sensors.

The combination of using a predetermined limited number of required sensors and a further number of extra sensors, added based on opportunity, allows to optimize performance of a hot water system in a building at reduced costs. According to the invention, different types of data can be collected from different buildings and can be used together, when the data relates to the same hot water system type, to estimate the behavior of the hot water system. Thereby, the invention uses a data-driven modeling approach for estimating behavior of the hot water system. The behavior estimator can comprise a function approximation technique such as a non-linear regression method, for example a neural network or a decision tree-based method.

The function approximation links the observed sensor information to a computer-based model of the HW system. This function approximation takes as input sensor data, such as observed temperature in the vessel, ambient temperature, occupant consumption as well as internal HW system parameters. The output of this function approximation is a characterization of the entire HW system state. More concretely, this returns the complete current temperature distribution inside the storage vessel (in °C or °F), as well as how much energy (in watt-hours) would be required to reheat the storage vessel to any arbitrary set point and the power (in watts) that such an operation would consume. Preferably, the function approximation technique used to learn the HW system state is able to return the uncertainty around its estimates. Many nonlinear function approximation techniques exist which, in addition to the state estimate, also provide estimates of uncertainty including but not limited to tree-based methods, Gaussian processes and neural networks [3]. The document with references Coulston et al., Approximating Prediction Uncertainty for Random Forest Regression Models, Photogrammatic engineering and remote sensing, Vol. 82, No. 3, March 2016, pp. 189-197, is hereby incorporated by reference for explaining tree-based methods. The document with references C. E. Rasmussen & C. K. I. Williams, Gaussian Processes for Machine Learning, the MIT Press, 2006, ISBN 026218253X is hereby incorporated by reference for explaining Gaussian processes. The document with references G. Papadopoulos et al., Confidence Estimation Methods for Neural Networks: A Practical Comparison, ESANN'2000 Proceedings, ISBN 2-930307-00-5, pp. 75 - 80 is hereby incorporated by reference for explaining neural networks.

This estimate of uncertainty is intrinsically higher for states the function approximator has never seen before and low for states it has frequently encountered. Preferably, this estimate of uncertainty can be used to guide future system behavior to explore states which are currently unknown, yet offer the possibility of leading to better overall operation. Combining multiple data streams for the same HW system as the input of the function approximator essentially squashes this uncertainty much quicker and leads to better state estimates.

The sensor data collected from multiple buildings and relating to that hot water system type, are fed into the model so that the behavior is estimated based on the gathered data. This is called a black-box approach and improves the generalization potential of the estimation while minimizing the manual modelling effort. The generalization potential refers to the ability of the estimation to be accurate under a wide variety of operating conditions. Furthermore, the results of the behavior estimation are applicable to each hot water system of that type, including those that were not used in the model learning procedure. After the behavior has been estimated for a hot water system type, operation can be optimized based on this estimated behavior. This forms an iterative, closed-loop process, in which the estimated behavior of the hot water system is used for optimization, and the new data resulting from this optimization can be used to improve the behavior estimation step.

This also applies to operation of newly installed hot water systems, corresponding to a vessel type for which the behavior has already been estimated based on earlier installations for which data has already been collected. Operation of such a new installation can be directly optimized based on the previously estimated behavior. Furthermore, previously learnt models for behavior estimation for similar, but not the same, hot water systems can be used before sufficient data has been gathered in new installations to accelerate learning. This entire process can be further supplemented by the use of a thermodynamic model of the hot water system, if available. However, this thermodynamic model is only intended to act in addition to the data-driven behavior estimation and does not reduce the general applicability of the invention.

A precise, reliable knowledge of the hot water system unlocks the potential to perform active control to improve energy efficiency and provide demand response services to the grid etc. Since the optimization process builds on historic user data, guarantees can be provided to ensure occupant comfort at all times. This approach is markedly different than the current industrial trend whereby research is focused on optimizing the 'how' question, i.e. energy efficiency is being marginally increased by regulating the heating cycles of the heating mechanism. Making such low-level thermodynamics the focus of optimization leaves the door open for myopic, local optimal control. Considering a more systemic approach of 'when' to provide hot water depending on occupant needs and grid constraints leads to a much more desirable outcome in terms of both energy efficiency as well as system boundaries. This invention addresses exactly this problem of local-global energy optimization: an exact estimation of behavior of the hot water system and how the occupants will interact with it leads to the minimum energy consumption with least impact on the grid and with substantially unaffected occupant comfort.

Preferably, the hot water system comprises at least one of a hot water vessel and a heating mechanism, and wherein the hot water system type comprises a corresponding at least one of a hot water vessel type and the heating mechanism type. Different buildings can be provided with different combinations of heating mechanisms and hot water vessels. Behavior modeling is therefore preferably a combination of at least one of a model of the hot water vessel and a model of the heating mechanism. Preferably, the step of estimating the behavior for each of the hot water system types comprises estimating a behavior for each of the hot water vessel types and each of the heating mechanism types. When behavior is estimated for each of the hot water vessel types and heating mechanism types, separately, the behavior can be more accurately estimated, and different combinations can be made in buildings of heating mechanisms and/or hot water vessels, which combination can be optimized by combining corresponding estimated behaviors.

Preferably the method comprises a training phase and an operational phase, wherein at least in the training phase, said the at least hot water system data record comprises at least one of:
- a water flow data record;
- an energy flow data record; and
- a water temperature data record.

Further preferably, in the operational phase, said at least a hot water system data record comprises at least an energy flow data record. More preferably, the energy flow data record; and either water flow data record or water temperature data record together form the minimal required sensor data. Further preferably, additional data records are added. The additional data records are generated by sensors added to the hot water system and/or the building based on opportunity. The water temperature data record can be recorded via a single sensor or a combination of them, and there are no limitations on such sensor placement, given it is known approximately a priori.

Preferably each of the multiple sets of at least a hot water system data record and a corresponding hot water system type further comprises a timestamp providing a time-related indication of relevance of the hot water system data record. Via the timestamp, hot water usage or time can be monitored to extract usage patterns. These usage patterns can differ from building to building and from hot water system to hot water system. The hot water system behavior model is independent or at least substantially independent from the usage pattern. The hot water system state at any given time, on the other hand, depends on the usage pattern. Therefore, when on the one hand the usage pattern is known, and on the other hand the system behavior is known, operation can be optimized. Furthermore, adding a timestamp allows adding further data to the estimator such as weather-related data and/or dynamic energy pricing information. In this context, it will be clear that the weather can also influence the behavior of a hot water system, so that including such data into the estimator improves the behavior estimation.

Preferably, the step of estimating comprises:
- setting up a predetermined adaptive hot water system model for each of the hot water system types;
- feeding the collected sensor data to the corresponding hot water system model; and
- adapting the adaptive hot water system model to learn the behavior of the corresponding hot water system using machine learning algorithms.

The predetermined adaptive hot water system model is preferably formed by a general non-linear function approximation method. Sensor data is aggregated from all hot water systems belonging to the same family, and fed to the function approximation method. Optionally, real sensor data can be supplemented with data sampled from a thermodynamic model, if available. This aspect of the invention has the ability to explicitly combine data-based machine learning algorithms with the adaptive hot water system model, if available. Such adaptive hot water system model can make use of thermodynamic behavior principles or previously gathered data from similar, but not the same, hot water system type, and wherein the model is parameterized based on the data fed into the model.

Preferably, the step of optimizing operation comprises balancing over time the energy input to the hot water system to improve energy consumption and to meet hot water requirements. The overall goal of optimizing operation of a hot water system is that the requirements for hot water are met while consuming a minimum amount of energy. Energy efficiency can thus be maximized by providing just-in-time heating, i.e. by matching provision of heat with user demand for hot water. A simple example can demonstrate why this is the desired behavior. As long as the demand is met, any excess quantity of hot water in the system is immaterial to occupant comfort and therefore leads to unnecessary thermodynamic losses to the ambient. Furthermore, systems such as heat pumps can operate more (or less) efficiently depending on the ambient climate conditions.

Additionally, the energy consumption profile over time can also influence the energy costs. This will be made clear with a simple explanatory example. Pulling an amount of energy out of the energy grid via an energy peak, in a time period where no significant green energy is produced, will result in a high electricity cost. Pulling the same amount of energy out of the electricity grid over a period of time and at a rate at which green energy is produced, the electricity is significantly less expensive. By mapping the hot water requirements and by taking into account the behavior of the hot water system, energy consumption can be balanced to positively influence the environmental impact. Similarly, energy costs can be dependent on variable tariff schemes such as time-of-use and time-of-day pricing schemes.

Preferably, the improving energy consumption comprises at least one of:
- reducing overall energy consumption;
- reducing energy consumption peaks;
- reducing overall energy costs;
- reacting to imbalances on the energy grid; and
- matching energy availability with energy consumption.

The advantages that are illustrated above using the simple example apply when peaks are reduced and when energy availability is matched with energy consumption.

Preferably the hot water requirements are determined for each of the multiple hot water systems from the collected sensor data, to indicate at least one of the amount over time and/or temperature over time of hot water consumed from each of the hot water systems. By mapping the hot water requirements, user comfort can remain maximal while the hot water system is operated, over time, below its maximum capacity. The available amount of hot water in the hot water system is controlled based on the requirements. Furthermore, the behavior of the hot water system is taken into account, such that energy consumption can be balanced in an optimal manner. This includes the rate at which the hot water system can be reheated to a reasonable temperature.

The invention further relates to a data storage device and coding program in machine readable and machine executable form to perform the steps of the method of the invention. The invention further relates to a computer program in machine readable and machine executable form to perform the steps of the method of the invention.

The invention will now be described in more details with respect to the drawings illustrating some preferred embodiments of the invention. In the drawings:
figure 1 schematically shows an embodiment of the invention;
figure 2 illustrates that problem that is at least partly solved by the invention;
figure 3 shows a scheme for processing data from multiple buildings; and
figure 4 shows a scheme illustrating the iterative nature of the model building and optimization process.

In the drawings a same reference number has been allocated to a same or analogous element.

In the description, the term energy efficiency refers to the possible increase or decrease in amount of energy required to perform a predetermined service, e.g. heating up a water vessel. In this context, the predetermined service may be defined as with the same level of user comfort. The term demand response refers to reaction to the state of the energy grid by switching hot water system operation from times when energy supply is low to when supply is higher. Thereby automatic demand response means doing this automatically, i.e. without direct occupant feedback. The term building refers to one or a combination of a residential, commercial or industrial scale building that is equipped with a hot water system. The term hot water vessel is the storage vessel storing water and is an important aspect in both energy efficiency and demand response considerations in this invention. In this context, it is noted that the invention is agnostic of the physical characteristics of a particular hot water vessel. The term heating mechanism or heating source is defined as the elements used to transform an energy medium into hot water for use or for storing in the hot water vessel. In this context it is noted that the invention is agnostic of the heating mechanism as long as the energy is measured either directly or in an aggregated form which can then be disaggregated. The term smart meter is defined as an electricity or gas consumption measuring device at the user's premises that is characterized by the measurement being done at a specified granularity (e.g. 5 minutes). Preferably, the output of the smart meter is transmissible over a communication network, for example a secured internet connection. The term flow meter relates to a sensor measuring, analogue to the smart meter, the flow of hot water as an amount over time. The term data aggregation means combining multiple streams of information into one. The term disaggregation refers to the inverse step of data aggregation. The term hot water vessel state relates to the temperature distribution inside the vessel which can be used to estimate the amount of remaining hot water, i.e. above a certain predefined temperature threshold, that would be available to the occupant when completely draining the hot water vessel. The term transition in the hot water vessel state is the change in this state depending on a perturbation caused by occupant behaviour.

There are in 2016 an estimated 50 million hot water vessels in the EU at a residential level only. Converting from thermic to electric potential, this represents energy storage of the order of hundreds of TWh's. Likewise, the peak power potential is of the order of hundreds of GW's. Both of these figures alone far exceed the requirements or indeed installed capacity of smaller European countries such as Belgium and The Netherlands. Executing the invention on even a fraction of these vessels will thus allow enormous savings in energy and the possibility of demand response for the energy grid.

Empirical results show that applying the principles of the invention can allow for energy savings of, on the average, more than 10%. These energy savings can, when required, be used for providing demand response and ancillary services to the energy grid without the risk of compromising occupant comfort. These guarantees on occupant comfort are in stark contrast to the forced closure of certain services in times of supply-demand mismatch and the purported risk of a full-blown brown-out or black-out in many European countries at the moment.

Finally, the invention also ensures that it provides these services at the lowest system cost in an autonomous manner and one that is robust to the presence or absence of certain sensors. It is important to note here that the closest alternative to providing year-round flexibility would be to install large-scale electric batteries. However, it would require unprecedented levels of investment to even come close to the amount of flexibility that can be derived from these hot water vessels at a fraction of the cost.

This is further motivated by the fact that:
- hot water vessels represent year-round energy flexibility to the electric grid, as thermal storage to dampen out intermittent, stochastic renewable generation; this is in contrast to the thermal mass of buildings, which is only available for some part of the year, depending on local climate.
- The energy consumed for hot water provision is on the rise in relative terms because of drastic reductions in HVAC consumption caused by specific energy efficiency gains.
- The power consumed for hot water provision represents a temporally concentrated peak load while space heating (HVAC) is a more distributed load over time.

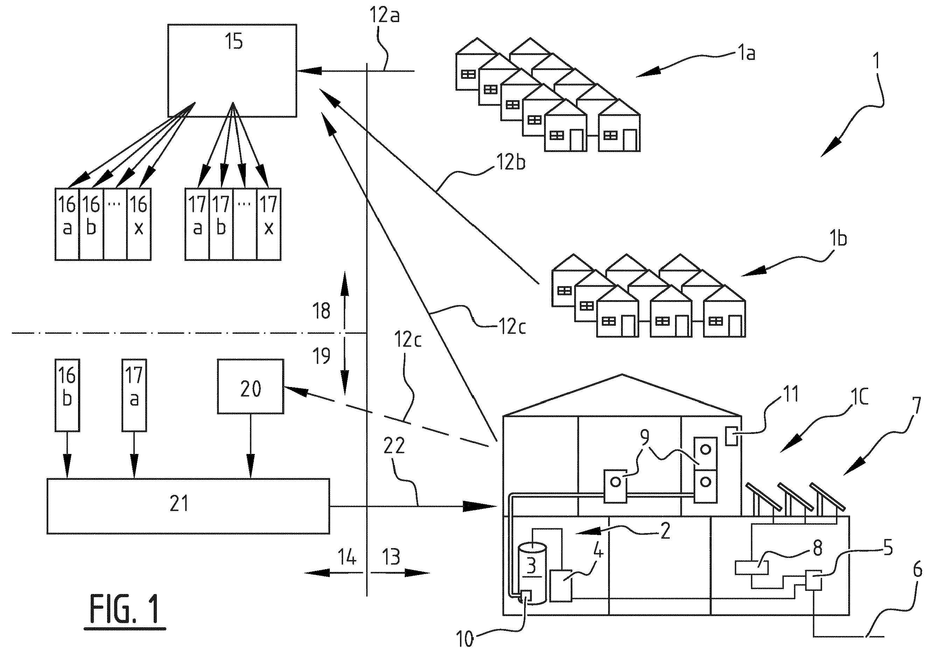

Figure 1 schematically illustrates an embodiment of the invention. Figure 1 shows multiple buildings 1. Thereby, figure 1 illustrates a first number of buildings 1a, in a first geographical location. A second number of buildings 1b is provided at a second geographical location different from the first location, for example in another state or country. Figure 1 further shows a building 1c in more detail. The building 1c is merely shown as an example to illustrate the invention.

Each of the multiple buildings 1 is provided with at least one hot water system 2. Thereby, typically, each building unit has its own hot water system 2. Some buildings, such as apartment buildings, have multiple building units and can therefore comprise multiple hot water systems. Alternatively, a single hot water system can be used in a building to provide multiple building units with hot water.

A hot water system 2 comprises at least a heating mechanism 4 for heating hot water. Preferably, the hot water system further comprises a hot water vessel 3 adapted to store a predetermined amount of hot water. When a combination of a hot water vessel 3 and a heating mechanism 4 is provided as a hot water system 2, the water in the vessel 3 is typically kept at a predetermined minimum temperature by the heating mechanism 4. This is sub-optimal since hot water vessels 3 are rarely emptied completely by a user. While such configuration of a hot water system 2 comprising a hot water vessel 3 and a heating mechanism 4 is highly comfortable for a user, it is also highly inefficient. The user comfort is the result from a large amount of hot water being constantly available to the user at any given moment in time. The inefficiency can be best explained using a simple example. When no hot water is used by a user, still the hot water in the hot water vessel will periodically be reheated. Therefore a threshold temperature is set and when the temperature of the water in the water vessel drops below the threshold value, the heating mechanism 4 is activated to reheat the water in the vessel 3. This reheat mechanism is oblivious to the fact that there might be no requirement for hot water from the building occupant as well as the nonlinear dynamics of hot water storage, i.e. hot water rises to the top and the temperature distribution inside the storage vessel isn't uniform. Further, ambient-temperature dependent heating systems such as heat pumps might be more or less efficient depending on when the reheat cycle takes place. Furthermore, external energy availability at the moment of reheating or the actual energy costs are not taken into account. Furthermore, the reheating speed, related to the power used to reheat the water, is not actively controlled. From this simple example, it is clear that such reheating might lead to a situation where the heating mechanism starts reheating the storage vessel 3 at 10.30 pm, when no green energy is available from solar panels and when, according to specific models built using historic data, chances are very low that the user will consume hot water in the next few hours. Drawing energy out of the energy grid at such a moment in time is highly probable to be sub-optimal therefore. However, optimisation options can only be discovered when the behaviour of the hot water system 2 is known and preferably when the hot water needs in the building are mapped.

In the invention, sensors are provided in the multiple buildings 1, collecting data relating to the hot water usage in the buildings and/or the energy consumption/availability in the buildings. Thereby different sensors and different number of sensors can be provided in different buildings for different purposes, as will be clear from the explanation and examples hereunder.

The main effect of the invention is that the sensor requirements to be able to optimise the hot water provision are minimized. A smart meter measuring energy flow to the hot water system is considered as the absolute minimum requirement for the system to work. The temperature and flow meter are only necessary for the initial model building phase of a new type of storage vessel. Both of these can be installed non-invasively at the outflow of the storage vessel, if the vessel doesn't come equipped with them. More instances of hot water systems, available during the initial model building phase, can lead to faster estimation of the hot water system behaviour.

In case, a temperature sensor is available in the middle of the storage vessel, or at any other known location in the vessel, this is also sufficient for the model to be built. Finally, the smart meter and heating mechanism type doesn't matter, practically this means that the system works just as well with gas heating systems as with electric heaters, heat pumps and combined heat and power (CHP) plants etc. This means that the generalization potential of the invention far exceeds that which can be obtained with a naive black box alone or with a more specialized gray- or white-box model.

The smart meter is illustrated in figure 1 with reference number 5. The smart meter 5 connects the electric or gas power system in the house 1c with the electric or gas grid 6. From the power meter 5, an indication of energy availability and of energy usage is derivable. Based on the data from the smart meter 5, in combination with the estimated behaviour of the hot water system 2, which will be further described hereunder, the hot water provision can be optimized. As already described above, to be able to build a model to estimate the behaviour of the hot water system 2, additionally to the smart meter 5, a flow and temperature sensor 10 is necessary. The flow and temperature sensor 10 measure the flow of hot water and the temperature of the hot water that is consumed from the hot water system 2. In figure 1, a hot water vessel 3 is provided, and all hot water that is consumed is drawn from the hot water vessel so that the temperature sensor and flow sensor 10, illustrated as a single sensor, are provided at the hot water vessel 3 exit. It will be clear for the skilled person that the flow sensor and temperature sensor can also be embodied in multiple elements, and located at different locations. Based on the combination of data from the smart meter 5 and from the temperature and flow meter 10, the behaviour of the hot water system 2 can be estimated by aggregating information from across all hot water systems of the same type.

Additional sensors can be added based on opportunity. Using the additional sensors, the behaviour of the hot water system 2 can be estimated in more detail and hot water usage can be mapped in more detail. In the example of figure 1, the building 1c is provided with solar panels. Solar panels are typically connected to the internal electricity system of the building via a converter 8. This converter 8 therefore aggregates data that specifically relates to availability of green energy in the building 1c. It will be clear to the skilled person that this information on availability of green energy can be used to optimise the energy consumption of the hot water system. In the invention, this information is considered to be data from sensors added based on opportunity. The sensors are present in the solar panel system and converter, and can provide data for further optimisation of the hot water system.

In a similar manner, hot water consuming devices 9 can be provided with sensors to provide further information on the hot water usage. For example, the hot water consumer device 9 may provide information as to the moments of time when hot water is used, and may also provide information as to the temperature at which the hot water is used. When hot water is used by all hot water consuming devices 9 at a maximum of 50°C, it would be sub-optimal to store the hot water in the hot water vessel 3 at e.g. 80°C. In the other way around, hot water requirement needs would not be met. Therefore, such data represents knowledge that can be collected from the building and be used in the invention. Figure 1 further shows a weather station 11 in the building 1c, generating weather related data, which can also be used in the invention as additional sensor data. It will be clear to the skilled person that the weather can influence both the behaviour of the heating system 2 and the hot water needs. The above described additional sensors are merely provided as examples of data that directly and/or indirectly relate to the hot water system behaviour and/or to the hot water requirements in the building 1.

Sensor data from the multiple buildings 1 is transmitted as illustrated in figure 1 with arrows 12a, 12b and 12c to a data aggregator 15. The data aggregator 15 is preferably located at a server side 14. Thereby, server side 14 forms a virtual environment formed by a server and/or computer and/or network of servers and/or computers. In figure 1, the server side is shown on the left hand side of the figure, separated from the field side 13, shown at the right hand side of the figure. At the field side 13, the data is collected at a geographical location by physically present sensors.

The transmitted data 12 is transmitted in sets of at least one data record and a hot water system type. Such sets can be directly formed by forming combinations of the data records from the sensor and the hot water system type that is installed in the building where the sensor data is collected. Alternatively, the sets are indirectly formed by identifying the building from which the sensor data is collected when transmitting the sensor data, and separately providing hot water system type information relating to the identified building. In the end, the data aggregator 15 is able to group the incoming data from the multiple buildings 1 according to hot water system type. This is illustrated in figure 1 with the arrows between the date aggregator 15 and the hot water vessels 16 and heating mechanisms 17. When the hot water system 2 is formed by a hot water vessel 3 and a heating mechanism 4, the data can be grouped accordingly.

At the server side 14 or locally in the field 13, preferably a generalizable non-linear function approximation model which uses an ensemble of regression methods including neural network- and random forest based estimators, is used to estimate the behaviour of the hot water system. Such model is provided to learn the behaviour of each hot water vessel type, indicated in figure 1 with 16a, 16b, ..., 16x, and for each heating mechanism type, indicated in figure 1 with 17a, 17b, ..., 17x. The function approximator can be any regression or classification method with sufficient representation power to correctly approximate the nonlinear dynamics of hot water vessel state and heating system energy consumption. This ensemble method provides estimates for both the current vessel state as well as how uncertain the function approximator is about this estimate. This uncertainty estimate is a function of whether similar data has been observed before. This model of hot water system can be used to simulate the state of the hot water vessel given a starting state and the expected occupant behaviour. Furthermore, it can predict the expected amount of energy the heating mechanism will consume to reheat the vessel along with an estimate of the uncertainty about this prediction, as well as the distribution of this energy over time, i.e. power consumption.

The expected current state and future transitions of the hot water vessel are used in conjunction with the heating mechanism predictions and opportunity-based sensors to optimize the operation of the hot water system. This can refer to maximizing energy efficiency, minimizing energy costs, and matching energy supply with demand etc. However, since data is used to learn the model in online settings, it can be uncertain or even incorrect for system states it has never seen before. This uncertainty measure in the vessel state and heating mechanism prediction is incorporated in the decision making process and by guiding the exploration strategy of the hot water system, i.e. to identify regions of the state-space which might lead to better optima.

By feeding the aggregated data to the corresponding behaviour models 16 and 17, the behaviour of each hot water vessel type and of each heating mechanism type can be modelled. Preferably, self-learning computer algorithms are provided for parametrising and fine-tuning the behaviour model based on the data. Thereby the object is to form the behaviour model so that the response of the model to an input corresponds to the response of the hot water system 2 to a similar input, which response is measured by the sensors.

By collecting a large amount of data from multiple buildings 1, wherein different sorts of sensor data is collected based on opportunity, highly detailed behaviour models can be generated at surprisingly low costs. After these models have been generated, they can be used to optimise the operation of the corresponding hot water systems. Therefore, the left end of figure 1 is separated in an upper part 18 showing the model building phase and a lower part 19 showing the optimisation phase. The model building phase is preferably executed at the server side 18, the optimisation phase 19 can likewise be executed remotely, at the server side 14, or locally in the field in distributed settings 13. Figure 1 shows an example where the optimisation phase is also executed at the server side 13.

Based on the sensor data 12 coming from each building, hot water requirements are mapped and energy availability is monitored, as is illustrated with block 20 in figure 1. The dotted line 12c is only added to clarify that the hot water requirement mapping and/or energy availability is determined for each of the multiple buildings 1 separately. In figure 1, operation of the hot water system of building 1c is optimised. Therefore, the sensor data transferred 12c from this particular building 1c is used to map 20 the hot water requirement and the energy availability. Furthermore, for this building 1c, it is known that the building 1c comprises a hot water vessel 3 corresponding to model 16b and comprises a heating mechanism 4 corresponding to model 17a. Therefore, model 16b and model 17a are used together with the hot water requirement and energy availability to calculate 21 optimisation parameters for the hot water system. These calculated parameters 21 can be provided, as illustrated with arrow 22, to the building. The parameters 21 form the basis for operating settings for the hot water system 2 so that a superior operation is obtained. The calculation of optimisation parameters 21 can focus on optimising the energy efficiency, and/or user comfort, and/or optimising usage of green energy and/or maximally reducing energy peaks consumed by the hot water system 2, or can focus on other optimisation goals. Also, multiple goals can be simultaneously set, wherein the goals are balanced with respect to each other to obtain an optimal performance of the hot water system. In this context, the skilled person will recognize that the optimisation goals can be prioritised based on user preferences and/or characteristics of the energy grid used by the hot water system.

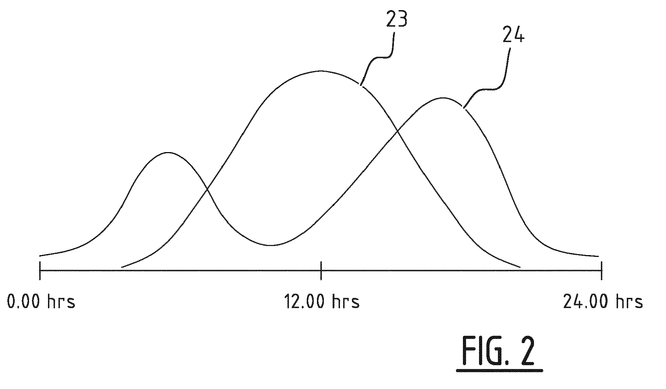

Figure 2 illustrates in a simple diagram the solar energy that is available over time with line 23, and shows the hot water usage over time with line 24. Using the hot water system model, from which the behaviour of the hot water system can be derived, operation of the hot water system is optimizable so that the energy usage can be maximally shifted towards the line 23. For example, the knowledge that a peak of hot water usage will arrive in the late afternoon, can be used to prepare the hot water required during the peak around noon, using solar energy 23. The skilled person will directly recognize how this information is usable to optimize the operation of the hot water system 2.

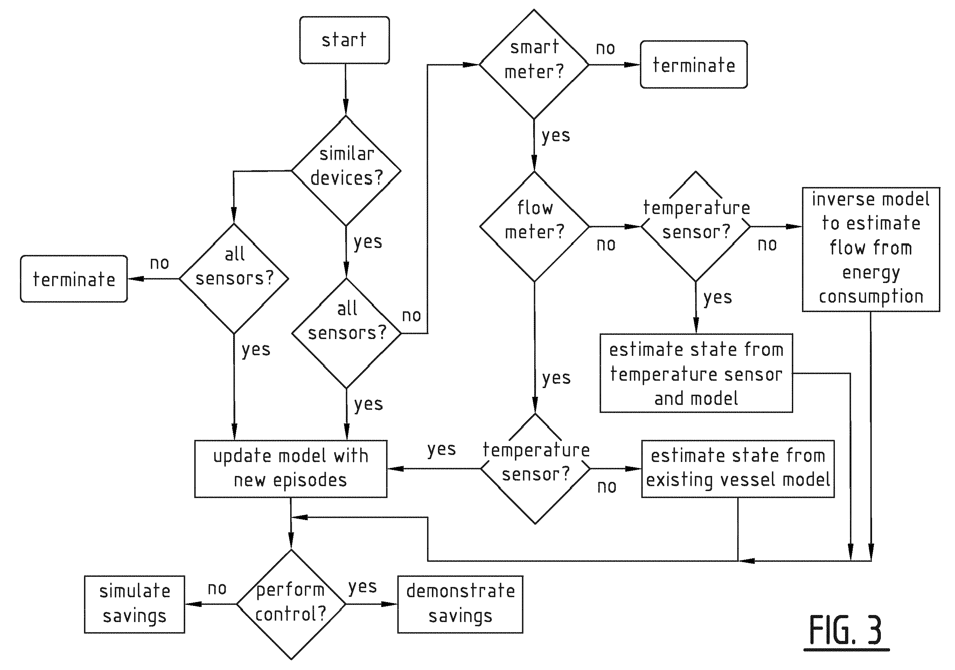

Figure 3 shows a self-explanatory scheme illustrating how data aggregated from multiple buildings can be used to optimise performance of the hot water system and to build the behaviour model. It shows one possible configuration for the expected system behaviour in the presence or absence of certain sensor configurations. Figure 3 also illustrates the case of incomplete sensor data; once a model has been trained for the hot water system, it is possible to optimize the hot water system operation. As an example, if the model for a particular type of hot water system has been learnt, then in new buildings equipped with that type of hot water system can be operated without the flow meter required to measure hot water consumption. In this case, the previously learnt hot water vessel model and the temperature sensor data observed in the new building can be used to estimate the flow of hot water, thereby enabling future optimization of the hot water system operation. A number of other possibilities exist to handle cases where other, or additional, sensors are missing.

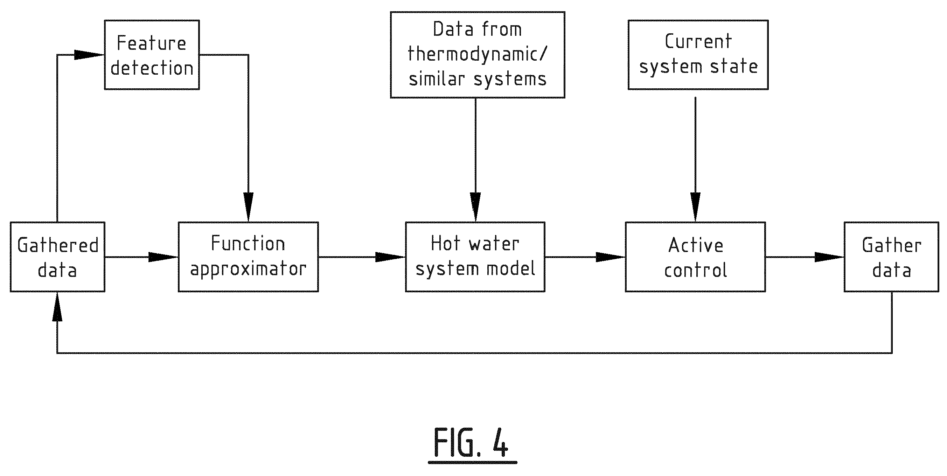

Figure 4 illustrates the possibly iterative nature of the model building and optimization process; whereby a model for the hot water system is built using collected data, which is then used to optimize operation of the hot water system. Subsequently, this can give rise to additional data records, which might themselves be preferably subsumed to update the model and its uncertainty estimates. The frequency of how often this model should be updated can be time-invariant (e.g. once a week), time-variant (e.g. once a day at the start of operation to once a month after substantial data has been collected) or data-dependent (e.g. as a function of information gain, i.e. once enough new data has been collected to substantially improve the existing model). This figure shows a mere example, and other schemes can also be used for managing the aggregated data.

Based on the description above and the corresponding drawings, the skilled person will be able to understand the advantages and effects of the invention. Furthermore, the skilled person will directly recognize that the invention is not limited to the examples given above, and that many more sensor data, behaviour estimation and optimisation possibilities are available for use by the skilled person. Therefore, the invention is not limited to the above described examples, and the scope of protection is only defined in the claims.

## Claims

1. Method for optimizing operation of at least one of multiple hot water systems in multiple buildings, the method comprising:
- collecting sensor data from said multiple hot water systems in said multiple buildings via a communication network, wherein the collected sensor data comprises multiple sets of at least a hot water system data record and a corresponding hot water system type;
- estimating a behavior for each of the hot water system types of the multiple hot water systems based on the collected sensor data;
- optimizing operation of at least one of the hot water systems based on the estimated behavior of the corresponding type of hot water system.

2. Method according to claim 1, wherein the hot water system comprises at least one of a hot water vessel and a heating mechanism, and wherein the hot water system type comprises a corresponding at least one of a hot water vessel type and a heating mechanism type.

3. Method according to claim 2, wherein the step of estimating a behavior for each of the hot water system types comprises estimating a behavior for each of the hot water vessel types and each of the heating mechanism types.

4. Method according to any one of the previous claims, wherein the method comprises a training phase and an operational phase, wherein at least in the training phase, said at least a hot water system data record comprises at least one of:
- a water flow data record;
- an energy flow data record; and
- a water temperature data record.

5. Method according to claim 4, wherein in the operational phase, said at least a hot water system data record comprises at least an energy flow data record.

6. Method according to claim 4 or 5, wherein each of the multiple sets of at least a hot water system data record and a corresponding hot water system type further comprises a timestamp providing a time-related indication of relevance of the hot water system data record.

7. Method according to any one of the previous claims, wherein the step of estimating comprises:
- setting up a generalizable function approximation to learn the hot water system behavior thereby forming a hot water system model for each of the hot water system types;
- aggregating the data gathered from multiple buildings into a form suitable for the function approximator;
- feeding the collected sensor data to the corresponding hot water system model; and
- adapting the adaptive hot water system model to learn the behavior of the corresponding hot water system using machine learning algorithms.

8. Method according to claim 7, wherein the improving energy consumption comprises at least one of:
- reducing overall energy consumption;
- reducing energy consumption peaks;
- reducing overall energy costs;
- reacting to imbalances on the energy grid; and
- matching energy availability with energy consumption.

9. Method according to claim 7 or 8, wherein the hot water requirements are determined for each of the multiple hot water systems from the collected sensor data, to indicate at least one of the amount over time and/or temperature over time of hot water consumed from each of the hot water systems.

10. Method according to claim 7, 8 or 9, wherein the method further comprises updating the hot water system model based on a combination of collected sensor data and estimation model uncertainty.

11. Method according to any one of the previous claims, wherein the step of optimizing operation comprises balancing over time the energy input to the hot water system to improve energy consumption and to meet hot water requirements.

12. Method according to any one of the previous claims, wherein the step of optimizing operation is based on a combination of the corresponding collected sensor data and said estimated behavior.

13. Data storage device encoding a program in machine-readable and machine-executable form to perform the steps of the method of any one of the previous claims 1-12.

14. Computer program in machine-readable and machine-executable form to perform the steps of the method of any one of the previous claims 1-12.
